# EUROPÄISCHE PATENTSCHRIFT

(11) **EP 2 711 593 B1**
(45) Veröffentlichungstag und Bekanntmachung des Hinweises auf die Patenterteilung: **14.10.2015**
(21) Anmeldenummer: 13003887.0
(22) Anmeldetag: 05.08.2013
(51) Int. Cl.: F16J 3/04, F16J 15/52

(54) **Dichtungsbalg, Verfahren zu dessen Herstellung und Dichtungsbalg-Anordnung**
Sealing bellows, method for their manufacture and seal bellows assembly
Soufflet d'étanchéité, son procédé de fabrication et agencement de soufflet d'étanchéité

(30) Priorität: 20.09.2012 DE 102012018586
(43) Veröffentlichungstag der Anmeldung: 26.03.2014
(73) Patentinhaber: Carl Freudenberg KG, 69469 Weinheim (DE)
(72) Erfinder: Idies, Nedal, 12105 Berlin (DE)

(56) Entgegenhaltungen:
- DE-A1- 4 304 774
- DE-A1-102006 039 861
- JP-U- S56 101 259
- US-A- 2 397 464

## Beschreibung

### Technisches Gebiet

Die Erfindung betrifft ein Verfahren zur Herstellung eines Dichtungsbalgs, einen entsprechend hergestellten Dichtungsbalg und eine Dichtungsbalg-Anordnung, die einen solchen Dichtungsbalg umfasst.

In einem ersten Verfahrensschritt wird ein Dichtungsbalg mit einem im Wesentlichen zylinderförmigen Mantel in einem formgebenden Verfahren hergestellt, wobei in einem zweiten Verfahrensschritt der Dichtungsbalg mit im Wesentlichen zylinderförmigem Mantel in eine beheizte Blasform mit im Wesentlichen kugelförmiger Kavität eingelegt und die Blasform luftdicht verschlossen wird, wobei in einem dritten Verfahrensschritt das Innere des Dichtungsbalgs mit einem relativen Überdruck derart beaufschlagt wird, dass sich der Mantel an die die Kavität der Blasform begrenzende Wandung anlegt und wobei die Blasform anschließend geöffnet und der Dichtungsbalg mit dem herstellungsbedingt im Wesentlichen kugelförmigen Mantel entformt wird.

### Stand der Technik

Ein solches Verfahren und ein danach hergestellter Dichtungsbalg sind aus der WO 2004/038237 A1 bekannt. Der durch das vorbekannte Verfahren hergestellte Dichtungsbalg hat einen Mantel, der herstellungsbedingt im Wesentlichen kugelförmig ist.

Der vorbekannte Dichtungsbalg gelangt zur Abdichtung von Kugelgelenken, Antriebswellen und dergleichen zur Anwendung, wobei das Verfahren folgende Verfahrensschritte umfasst:
- Erzeugen eines eine Wandung aus zumindest zwei Polymerlagen mit unterschiedlichen Materialeigenschaften aufweisenden, im Wesentlichen prismatischen Hohlkörpers;
- Einbringen des Hohlkörpers in eine Kavität;
- Ausformen durch Innendruckbeaufschlagung und anschließende Vulkanisation, Verfestigung bzw. Erstarrung des Hohlkörpers in der Kavität;
- Entformung des Balgs aus der Kavität.

Die Erzeugung des mehrlagigen Hohlkörpers im ersten Verfahrensschritt erfolgt durch Extrusion und anschließendes Ablängen. Bei der Extrusion werden üblicherweise feste bis dickflüssige, härtbare Werkstoffe unter Druck kontinuierlich aus einer formgebenden Öffnung herausgepresst. Dabei entstehen Hohlkörper mit dem Querschnitt der Öffnung in theoretisch beliebiger Länge.

Der vorbekannte Dichtungsbalg, der durch das vorbekannte Verfahren erzeugt wird, hat stirnseitig einerseits einen Dichtbereich und stirnseitig andererseits einen Befestigungsbereich, wobei sich in axialer Richtung zwischen dem Dichtbereich und dem Befestigungsbereich der Mantel erstreckt. Der Mantel, der Dichtbereich und der Befestigungsbereich sind materialeinheitlich ausgebildet.

Der Dichtbereich und der Befestigungsbereich weisen jeweils außenumfangsseitig umlaufende Ringnuten auf, in denen während der bestimmungsgemäßen Verwendung des Dichtungsbalgs Spannringe angeordnet sind, um den Dichtungsbalg befestigen zu können. Die Spannringe sind dabei jeweils als separat erzeugte Einzelteile ausgeführt und ungehaftet in den Ringnuten angeordnet.

Aus der DE 43 04 774 A1 ist ein Dichtungsbalg bekannt, über dessen Verfahren zur Herstellung keine Angaben gemacht sind. Im Befestigungsbereich des Dichtungsbalgs ist ein Dichtring angeordnet, der nur außenumfangsseitig und nur auf der axial dem Befestigungsbereich zugewandten Stirnseite vom Werkstoff des Dichtungsbereichs berührt ist. Innenumfangsseitig und auf der dem Befestigungsbereich axial abgewandten Stirnseite ist der Dichtring demgegenüber vom Werkstoff des Dichtungsbalgs nicht berührt. Der Innenumfang des Dichtrings und die dem Befestigungsbereich axial abgewandte Stirnseite des Dichtrings liegen frei.

Ein weiterer Dichtungsbalg, der vollständig materialeinheitlich ausgebildet ist, ist aus US 2,397,464 bekannt. Der Dichtungsbalg hat einen herstellungsbedingt im Wesentlichen kugelförmigen Mantel und stirnseitig beiderseits Dichtwulste, die einstückig ineinander übergehend und materialeinheitlich mit dem Mantel ausgebildet sind. Die Dichtwulste werden während der bestimmungsgemäßen Verwendung des Dichtungsbalgs formschlüssig in Aufnahmen aufgenommen.

Ein weiterer Dichtungsbalg ist aus der DE 10 2006 039 861 A1 bekannt und gelangt z. B. in Kraftfahrzeugen zur Abdichtung eines Kugelgelenks zur Anwendung. Der Dichtungsbalg verhindert das Eindringen von Schmutz und Feuchtigkeit in das Kugelgelenk, um eine geringe Wartungsintensität und eine hohe Lebensdauer des Kugelgelenks zu gewährleisten. Der Dichtungsbalg besteht aus einem gummielastischen Werkstoff, wobei in den Dichtbereich und in den Befestigungsbereich die Spannelemente zur Festlegung des Dichtungsbalgs an jeweils einem Maschinenelement integriert sind. Der Dichtbereich wird mittels seines Spannelements auf dem Kugelzapfen und anliegend am Hebelauge des Kugelgelenks montiert, der Befestigungsbereich ist mittels seines Spannelements demgegenüber am Gehäuse des Kugelgelenks festgelegt. Der Kugelzapfen, das Hebelauge und die Kugel des Kugelgelenks sind dabei relativ schwenkbar und drehbar zum Gehäuse des Kugelgelenks gelagert.

Der Mantel des Dichtungsbalgs kann auf Zug, Druck oder Biegung belastet werden.

Der vorbekannte Dichtungsbalg wird in einem formgebenden Verfahren, z. B. im Spritzgussverfahren hergestellt. Der Mantel ist dabei herstellungsbedingt im Wesentlichen zylinderförmig ausgebildet, um aus der Spritzgießmaschine entformbar zu sein. Erst bei der Montage des Dichtungsbalgs am Kugelgelenk wird der herstellungsbedingt im Wesentlichen zylinderförmige Mantel radial nach außen vorgewölbt, wobei er dadurch hohe Axialkräfte erzeugt. Die Axialkräfte erhöhen die Anpresskraft der Stirnseite des Dichtbereichs des Dichtungsbalgs gegen das Hebelauge in unerwünscht hohem Maß, wobei aus der erhöhten Anpresskraft erhöhter Verschleiß primär am Dichtbereich resultiert.

### Darstellung der Erfindung

Der Erfindung liegt die Aufgabe zugrunde, ein Verfahren zur Herstellung eines Dichtungsbalgs, einen Dichtungsbalg, der nach diesem Verfahren hergestellt ist und eine Dichtungsbalg-Anordnung derart weiterzuentwickeln, dass Dichtungsbälge herstellbar sind, bei denen eine Beschädigung des Dichtbereichs und des Befestigungsbereichs durch Montage externer Spannelemente ausgeschlossen ist und dass die Gebrauchseigenschaften des Dichtungsbalgs während einer längeren Gebrauchsdauer verbessert sind. Insbesondere sollen die Größe der auf den Dichtbereich wirksamen Axialkraft während der bestimmungsgemäßen Verwendung des Dichtungsbalgs und die Vorwölbung des Mantels in radialer Richtung weitgehend unabhängig voneinander sein.

Diese Aufgabe wird erfindungsgemäß durch ein Verfahren und einen Dichtungsbalg, der nach diesem Verfahren hergestellt ist gemäß Ansprüchen 1 und 3 sowie eine Dichtungsbalg-Anordnung gemäß Anspruch 6 gelöst. Auf vorteilhafte Ausgestaltungen nehmen die darauf jeweils rückbezogenen Ansprüche Bezug.

Zur Lösung der Aufgabe ist es vorgesehen, dass der Dichtungsbalg im ersten Verfahrensschritt durch ein Spritzgussverfahren mit im Dichtbereich und im Befestigungsbereich integrierten Spannelementen durch Vulkanisation hergestellt wird, dass die Vulkanisation nach Beendigung der Befüllung der Werkzeugkavität und nach dem Erreichen der Formstabilität des Dichtungsbalgs unterbrochen und der Dichtungsbalg dann entformt wird und dass der Dichtungsbalg im vierten Verfahrensschritt vor Öffnen der Blasform ausvulanisiert wird.

Bei einem solchen Verfahren ist von Vorteil, dass Dichtungsbälge erzeugt werden können, die herstellungsbedingt einen Hinterschnitt aufweisen. Solche Dichtungsbälge sind nur durch ein herkömmliches Spritzgussverfahren nicht herstellbar. Durch das erfindungsgemäße Verfahren lassen sich, wie zuvor bereits beschrieben, Dichtungsbälge herstellen, bei denen nur eine derart bemessene Axialkraft auf den Dichtbereich wirkt, wie erforderlich, um in diesem Bereich zuverlässig dynamisch abdichten zu können.

Im ersten Verfahrensschritt wird der Dichtungsbalg durch ein Spritzgussverfahren hergestellt. Spritzgussverfahren sind bewährte formgebende Verfahren, die prozesssicher durchführbar sind.

Das Innere des Dichtungsbalgs kann im dritten Verfahrensschritt mit Druckluft beaufschlagt werden. Druckluft zur Erzeugung eines relativen Überdrucks ist problemlos und preisgünstig verfügbar und besonders umweltverträglich.

Hierbei ist von Vorteil, dass die radiale Vorwölbung des Mantels nicht erst durch die Montage am Kugelgelenk, insbesondere durch axiale Stauchung des Dichtungsbalgs entsteht, sondern dass die im Wesentlichen kugelförmige Gestalt des Mantels herstellungsbedingt ist.

Durch vorbekannte formgebende Verfahren, wie z. B. durch ein herkömmliches Spritzgussverfahren, könnte ein solcher Dichtungsbalg nicht hergestellt werden. Durch die erhebliche radiale Vorwölbung des Mantels und dadurch, dass der dritte größte Innendurchmesser des Mantels jeweils größer als der erste und der zweite Innendurchmesser ist, würde sich ein solcher Dichtungsbalg in einem herkömmlichen Spritzgussverfahren aus der Werkzeugkavität des Spritzgießwerkzeugs nicht mehr entformen lassen

Außerdem betrifft die Erfindung einen Dichtungsbalg, hergestellt nach dem zuvor beschriebenen Verfahren, wobei der Dichtungsbalg stirnseitig einerseits einen Dichtbereich und stirnseitig andererseits einen Befestigungsbereich und einen in axialer Richtung zwischen dem Dichtbereich und dem Befestigungsbereich angeordneten Mantel umfasst, wobei der Mantel, der Dichtbereich und der Befestigungsbereich einstückig ineinander übergehend ausgebildet sind und aus einem gummielastischen Werkstoff bestehen und wobei im Dichtbereich und im Befestigungsbereich jeweils ein Spannelement integriert ist, wobei der Mantel herstellungsbedingt im Wesentlichen kugelförmig ausgebildet ist, wobei das erste Spannelement im Dichtbereich einen ersten Innendurchmesser aufweist, das zweite Spannelement im Befestigungsbereich einen zweiten Innendurchmesser und der Mantel einen dritten größten Innendurchmesser und wobei der dritte größte Innendurchmesser herstellungsbedingt jeweils größer als der erste und der zweite Innendurchmesser ist.

Dadurch, dass der Mantel bereits herstellungsbedingt im Wesentlichen kugelförmig ausgebildet ist und eine solche kugelförmige Gestalt des Mantels nicht erst durch die axiale Stauchung des Dichtungsbalgs entsteht, ist insbesondere der dynamisch beanspruchte Dichtbereich nur geringen mechanischen Belastungen ausgesetzt. Die Axialkräfte, mit denen der Dichtbereich das Hebelauge eines Kugelgelenks anliegend berührt, kann praktisch unabhängig von der Gestalt des Mantels so vorgesehen werden, dass einerseits die Abdichtung am Hebelauge zuverlässig funktioniert und andererseits die Axialkräfte nicht größer sind, als für eine gute Abdichtung in diesem Bereich unbedingt erforderlich. Der Dichtbereich weist dadurch während der bestimmungsgemäßen Verwendung des Dichtungsbalgs nur einen minimalen Verschleiß auf. Der Dichtbereich hat deshalb gleichbleibend gute Gebrauchseigenschaften während einer langen Gebrauchsdauer.

Der Mantel kann herstellungsbedingt zwiebelförmig ausgebildet sein. Eine solche Zwiebelform hat sich für Dichtungsbälge gut bewährt. Ein derart ausgebildeter Mantel kann Zug-, Druck- oder Biegebelastungen gut aushalten und weist deshalb eine gute Dauerhaltbarkeit auf.

Diese Dauerhaltbarkeit wird dadurch erhöht, dass der Mantel - weil er bereits herstellungsbedingt im Wesentlichen kugelförmig ausgebildet ist - nur vergleichsweise geringen Axialkräften während der bestimmungsgemäßen Verwendung ausgesetzt ist.

Die Spannelemente könnten aus einem zähharten Werkstoff bestehen und vom gummielastischen Werkstoff des Dichtbereichs und des Befestigungsbereichs vollständig umschlossen sein. Die Spannelemente können z. B. aus einem metallischen Werkstoff oder einem polymerischen Werkstoff bestehen. Durch die Integration der Spannelemente in den Dichtbereich und in den Befestigungsbereich sind die jeweiligen Spannelemente vor Korrosion, Verlust oder mechanischen Beschädigungen, z. B. durch Steinschlag, geschützt. Außerdem ist von Vorteil, dass durch die Integration der Spannelemente eine Beschädigung des Dichtbereichs und des Befestigungsbereichs durch Montage externer Spannelemente ausgeschlossen ist.

Außerdem betrifft die Erfindung eine Dichtungsbalg-Anordnung, umfassend einen erfindungsgemäßen Dichtungsbalg, wie zuvor beschrieben, wobei der Dichtbereich einen Kugelzapfen und ein Hebelauge eines Kugelgelenks dynamisch dichtend anliegend relativ beweglich berührt und wobei der Befestigungsbereich ein Gehäuse des Kugelgelenks dichtend anliegend, relativ ortsfest berührt.

In einer solchen Dichtungsbalg-Anordnung ist das Kugelgelenk während einer langen Gebrauchsdauer besonders sicher vor Verunreinigungen von Außen geschützt. Der Dichtungsbalg ist während seiner bestimmungsgemäßen Verwendung nur geringen mechanischen Belastungen, insbesondere auf axialen Druck ausgesetzt, weil der Dichtungsbalg herstellungsbedingt im Wesentlichen kugelförmig ausgebildet ist. Die kugelförmige Ausbildung wird nicht - wie im Stand der Technik - dadurch erreicht, dass ein im Wesentlichen zylinderförmiger Dichtungsbalg in axialer Richtung gestaucht wird.

Der Dichtbereich kann den Kugelzapfen mit zumindest einer radial innen angeordneten Radialdichtlippe dichtend umschließen und/oder das Hebelauge mit zumindest einer stirnseitig angeordneten Axialdichtlippe dichtend berühren. Weiter bevorzugt kann der Dichtbereich mit drei radial innen angeordneten Radialdichtlippen versehen sein, die einander im axialen Abstand benachbart zugeordnet sind. Diese Radialdichtlippen umschließen den Kugelzapfen dichtend. Außerdem gelangen bevorzugt zwei stirnseitig angeordnete Axialdichtlippen zur Anwendung, die einander mit radialem Abstand benachbart zugeordnet sind. Durch die erhöhte Anzahl der Radialdichtlippen und der Axialdichtlippen ist das Kugelgelenk besonders wirkungsvoll vor Verunreinigung und einer daraus resultierenden verringerten Gebrauchsdauer geschützt.

### Kurzbeschreibung der Zeichnung

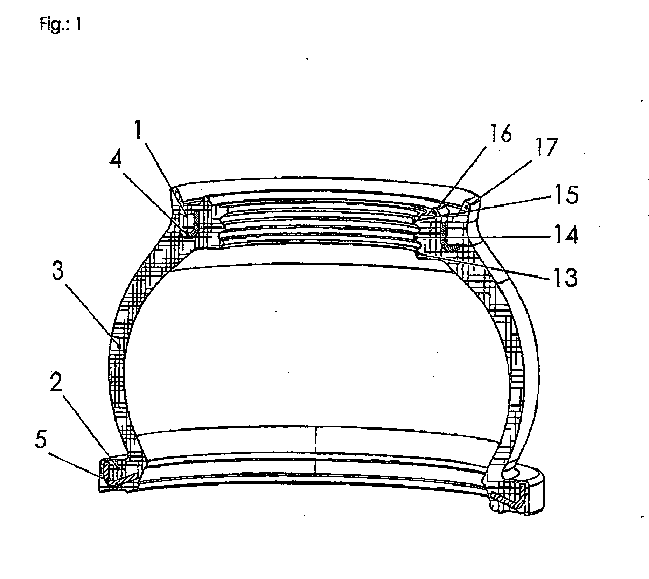

Ein Ausführungsbeispiel der erfindungsgemäßen Dichtungsbalg-Anordnung mit dem erfindungsgemäßen Dichtungsbalgs sowie das beanspruchte Verfahren zur Herstellung eines solchen Dichtungsbalgs sind in den Figuren 1 bis 4 dargestellt und werden im Folgenden näher beschrieben.

Die Fig. 1 bis 4 zeigen jeweils in schematischer Darstellung:
- Fig. 1: ein Ausführungsbeispiel des erfindungsgemäßen Dichtungsbalgs in seiner herstellungsbedingten Form, in geschnittener und perspektivischer Darstellung,
- Fig. 2: ein Ausführungsbeispiel einer erfindungsgemäßen Dichtungsbalg-Anordnung, wobei der Dichtungsbalg aus Fig. 1 zur Abdichtung eines Kugelgelenks zur Anwendung gelangt,
- Fig. 3: den Dichtungsbalg aus Fig. 1 während seiner Herstellung im Anschluss an den ersten Verfahrensschritt, mit zylinderförmigem Mantel und
- Fig. 4: den erfindungsgemäßen Dichtungsbalg gemäß Fig. 1 nach seiner Herstellung, herstellungsbedingt mit im Wesentlichen kugelförmigem Mantel.

### Ausführung der Erfindung

In Fig. 1 ist ein Ausführungsbeispiel des erfindungsgemäßen Dichtungsbalgs in seiner herstellungsbedingten Form gezeigt.

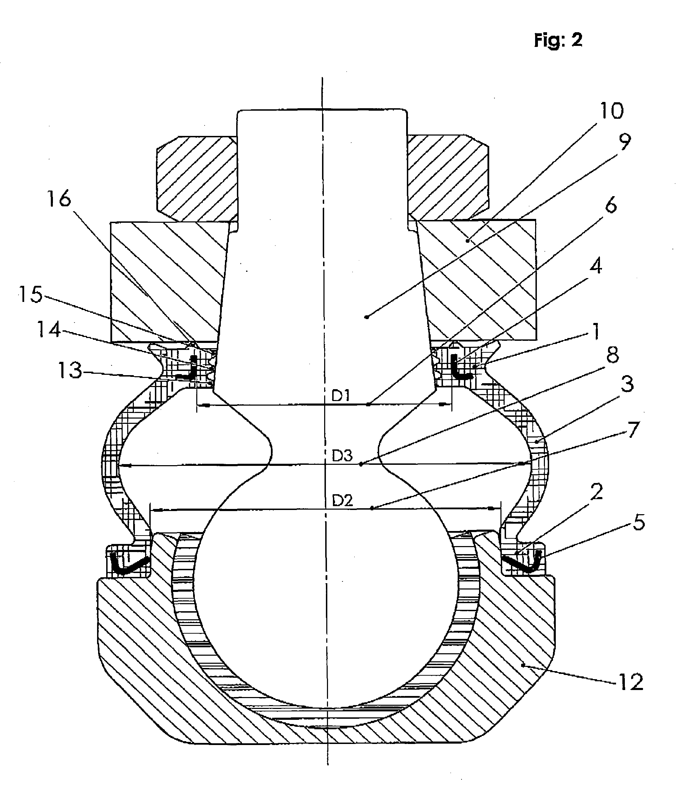

Der Dichtungsbalg weist stirnseitig einerseits den Dichtbereich 1 und stirnseitig andererseits den Befestigungsbereich 2 auf. Der Dichtbereich 1 umfasst drei radial innen und mit axialem Abstand zueinander benachbart angeordnete Radialdichtlippen 13, 14, 15 und zwei Axialdichtlippen 16, 17, die einander mit radialem Abstand benachbart zugeordnet sind. In den Dichtbereich 1 ist das erste Spannelement 4 integriert, das im Wesentlichen L-förmig ausgebildet ist und aus einem zähharten Werkstoff, beispielsweise aus einem metallischen Werkstoff besteht. Das erste Spannelement 4 ist ebenso vollständig vom gummielastischen Werkstoff des Dichtbereichs 1 umschlossen, wie das zweite Spannelement 5 vom gummielastischen Werkstoff des Befestigungsbereichs 2. Die Spannelemente 4, 5 sind vorgesehen, um den Dichtbereich 1 und den Befestigungsbereich 2 sicher an jeweils einem Maschinenelement befestigen zu können, wie nachfolgend noch anhand von Fig. 2 näher erläutert wird.

Der Dichtungsbalg weist durch seinen kugelförmig gestalteten Mantel 3 einen Hinterschnitt auf, der alleine durch übliche formgebende Verfahren, wie beispielsweise Spritzgießen, nicht herstellbar ist.

Durch den im Wesentlichen kugelförmig ausgebildeten Mantel 3 vermag der Dichtungsbalg bereits in seiner herstellungsbedingten Form alle Belastungen, die während seiner bestimmungsgemäßen Verwendung auf ihn einwirken, gut und dauerhaltbare aufzunehmen. Insbesondere die axiale Vorspannung, mit der die Axialdichtlippen 16, 17 eine abzudichtende Fläche eines Maschinenelements anliegend berühren, kann dadurch so eingestellt werden, wie es für den jeweiligen Anwendungsfall ideal ist; die axiale Anpressung der Axialdichtlippen 16, 17 an das abzudichtende Maschinenelement muss nicht durch eine Stauchung des Mantels in eine kugelförmige Gestalt bewirkt werden.

In Fig. 2 ist ein Ausführungsbeispiel einer Dichtungsbalg-Anordnung gezeigt, in der der Dichtungsbalg aus Fig. 1 zur Anwendung gelangt. Der Dichtbereich 1 umschließt mit seinen Radialdichtlippen 13, 14, 15 den Kugelzapfen 9 unter radialer Vorspannung dichtet. Das Hebelauge 10 des Kugelgelenks 11 wird demgegenüber durch die beiden stirnseitig angeordneten Axialdichtlippen 16, 17 dynamisch abgedichtet.

Der Mantel 3 ist herstellungsbedingt im Wesentlichen kugelförmig ausgebildet und weist einen dritten größten Innendurchmesser 8 auf, der herstellungsbedingt jeweils größer als der erste Innendurchmesser 6 des ersten Spannelements 4 und größer als der zweite Innendurchmesser 7 des zweiten Spannelements 5 ist. Dadurch ist der Mantel 3 herstellungsbedingt zwiebelförmig ausgebildet.

Der Befestigungsbereich 2 dichtet gegenüber dem Gehäuse 12 des Kugelgelenks 11 statisch ab. Eine sichere Festlegung des Dichtbereichs 1 auf dem Kugelzapfen 9 und des Befestigungsbereichs 2 am Gehäuse 12 ergibt sich durch die Spannelemente 4, 5 in den jeweiligen Bereichen 1, 2.

Im Vergleich zu den Dichtungsbälgen aus dem Stand der Technik ist keine hohe Axialkraft erforderlich, um den Mantel 3 in eine kugelförmige Gestalt zu stauchen. Dadurch, dass der Mantel bereits herstellungsbedingt zwiebelförmig ausgebildet ist, ist die Axialkraft, mit der die Axialdichtlippen 16, 17 die Stirnseite des Hebelauges 10 anliegend berühren, vergleichsweise gering. Daraus resultiert eine lange Gebrauchsdauer der Axialdichtlippen 16, 17. Insgesamt gleichbleibend gute Gebrauchseigenschaften des Dichtungsbalgs während einer langen Gebrauchsdauer sind die Folge.

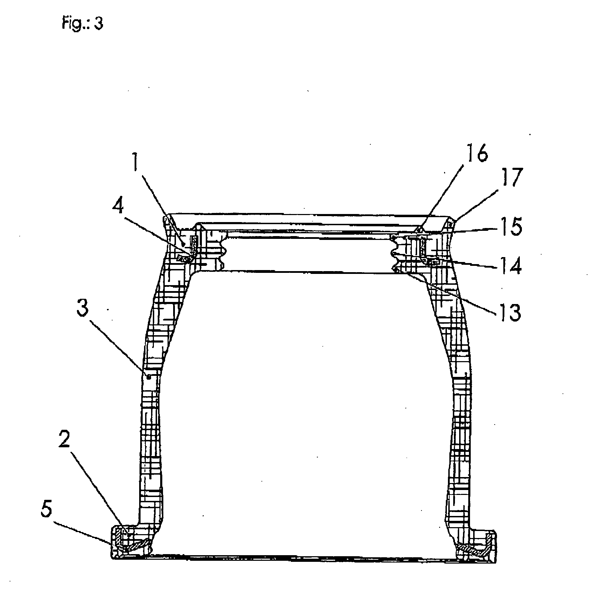

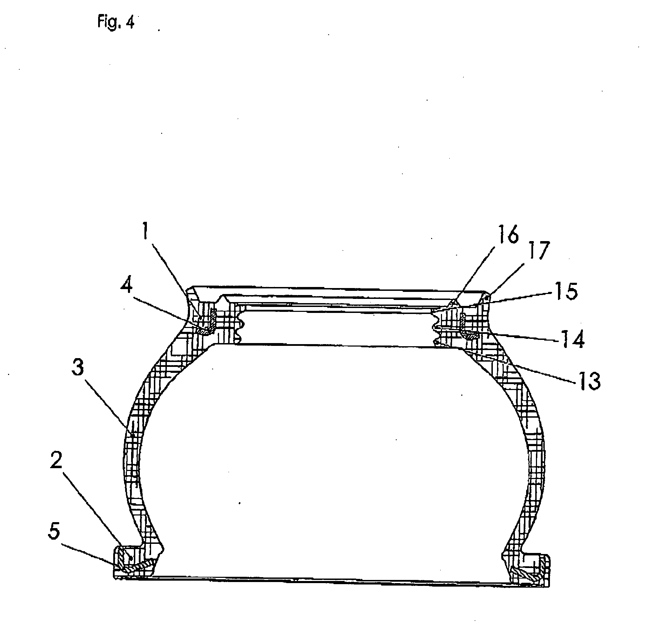

Anhand der Figuren 3 und 4 wird das Verfahren zur Herstellung des Dichtungsbalgs aus Fig. 1 näher erläutert.

Im Prinzip besteht das Verfahren zunächst aus dem Spritzgießen eines Dichtungsbalgs mit zylinderförmigem Mantel 3, wie in Fig. 3 gezeigt, und dem anschließenden Aufblasen dieses Dichtungsbalgs, der anschließend herstellungsbedingt die in Fig. 4 gezeigte Form aufweist.

In einem ersten Verfahrensschritt wird zunächst ein Dichtungsbalg hergestellt, wie in Fig. 3 gezeigt. Der Dichtungsbalg umfasst den Dichtbereich 1 und den Befestigungsbereich 2, wobei in den beiden Bereichen 1, 2 jeweils ein Spannelement 4, 5 integriert ist.

Die Herstellung eines solchen Dichtungsbalgs erfolgt durch ein formgebendes Verfahren durch Vulkanisation, beispielsweise durch ein Spritzgussverfahren. Nach Beendigung der Befüllung der Werkzeugkavität und nach dem Erreichen der Formstabilität des Dichtungsbalgs wird die Vulkanisation zunächst unterbrochen und der Dichtungsbalg wird dann entformt. Der Dichtungsbalg liegt dann in der in Fig. 3 gezeigten Form vor.

In einem zweiten Verfahrensschritt wird der Dichtungsbalg mit seinem im Wesentlichen zylinderförmigen Mantel 3 in eine beheizte Blasform mit im Wesentlichen kugelförmiger Kavität eingelegt. Die Blasform wird anschließend luftdicht verschlossen und in einem dritten Verfahrensschritt wird das Innere des bis dahin im Wesentlichen zylinderförmig ausgebildeten Dichtungsbalgs mit einem relativen Überdruck beaufschlagt. Dadurch legt sich der zunächst zylinderförmige Mantel 3 an die die im Wesentlichen kugelförmige Kavität der Blasform begrenzende Wandung an. Im vierten Verfahrensschritt wird der Dichtungsbalg ausvulkanisiert, die Blasform wird anschließend geöffnet und der Dichtungsbalg mit dem herstellungsbedingt im Wesentlichen kugelförmigen Mantel 3 entformt.

Ein derart hergestellter Dichtungsbalg in seiner herstellungsbedingten und gebrauchsfertigen Form ist in Fig. 4 gezeigt.

## Patentansprüche

1. Verfahren zur Herstellung eines Dichtungsbalgs mit einem Mantel (3), wobei in einem ersten Verfahrensschritt ein Dichtungsbalg mit einem zylinderförmigen Mantel (3) in einem formgebenden Verfahren hergestellt wird, wobei in einem zweiten Verfahrensschritt der Dichtungsbalg mit zylinderförmigem Mantel (3) in eine beheizte Blasform mit kugelförmiger Kavität eingelegt und die Blasform luftdicht verschlossen wird, wobei in einem dritten Verfahrensschritt das Innere des Dichtungsbalgs mit einem relativen Überdruck derart beaufschlagt wird, dass sich der Mantel (3) an die Kavität der Blasform begrenzende Wandung anlegt und wobei die Blasform anschließend geöffnet und der Dichtungsbalg mit dem herstellungsbedingt kugelförmigen Mantel (3) entformt wird, **dadurch gekennzeichnet, dass** der Dichtungsbalg im ersten Verfahrensschritt durch ein Spritzgussverfahren mit im Dichtbereich (1) und im Befestigungsbereich (2) integrierten Spannelementen (4, 5) durch Vulkanisation hergestellt wird, dass die Vulkanisation nach Beendigung der Befüllung der Werkzeugkavität und nach dem Erreichen der Formstabilität des Dichtungsbalgs unterbrochen und der Dichtungsbalg dann aus der Werkzeugkavität des Spritzgießwerkzeugs entformt wird und dass der Dichtungsbalg im vierten Verfahrensschritt vor Öffnen der Blasform ausvulkanisiert wird.

2. Verfahren nach Anspruch 1, **dadurch gekennzeichnet, dass** das Innere des Dichtungsbalgs im dritten Verfahrensschritt mit Druckluft beaufschlagt wird.

3. Dichtungsbalg, hergestellt nach einem Verfahren gemäß einem der Ansprüche 1 oder 2, umfassend stirnseitig einerseits einen Dichtbereich (1), stirnseitig andererseits einen Befestigungsbereich (2) und einen in axialer Richtung zwischen dem Dichtbereich (1) und dem Befestigungsbereich (2) angeordneten Mantel (3), wobei der Mantel (3), der Dichtbereich (1) und der Befestigungsbereich (2) einstückig ineinander übergehend ausgebildet sind und aus einem gummielastischen Werkstoff bestehen und wobei im Dichtbereich (1) und im Befestigungsbereich (2) jeweils ein Spannelement (4, 5) integriert ist, wobei der Mantel (3) herstellungsbedingt kugelförmig ausgebildet ist, wobei das erste Spannelement (4) im Dichtbereich (1) einen ersten Innendurchmesser (6) aufweist, das zweite Spannelement (5) im Befestigungsbereich (2) einen zweiten Innendurchmesser (7) und der Mantel (3) einen dritten größten Innendurchmesser (8) und wobei der dritte größte Innendurchmesser (8) herstellungsbedingt jeweils größer als der erste (6) und der zweite Innendurchmesser (7) ist.

4. Dichtungsbalg nach Anspruch 3, **dadurch gekennzeichnet, dass** der Mantel (3) herstellungsbedingt zwiebelförmig ausgebildet ist.

5. Dichtungsbalg nach Anspruch 3, **dadurch gekennzeichnet, dass** die Spannelemente (4, 5) aus einem zähharten Werkstoff bestehen und vom gummielastischen Werkstoff des Dichtbereichs (1) und des Befestigungsbereichs (2) vollständig umschlossen sind.

6. Dichtungsbalg-Anordnung, umfassend einen Dichtungsbalg nach einem der Ansprüche 3 bis 5, wobei der Dichtbereich (1) einen Kugelzapfen (9) und ein Hebelauge (10) eines Kugelgelenks (11) dynamisch dichtend anliegend, relativ beweglich berührt und wobei der Befestigungsbereich (2) ein Gehäuse (12) des Kugelgelenks (11) dichtend anliegend, relativ ortsfest berührt.

7. Dichtungsbalg-Anordnung nach Anspruch 6, **dadurch gekennzeichnet, dass** der Dichtbereich (1) den Kugelzapfen (9) mit zumindest einer radial innen angeordneten Radialdichtlippe (13, 14, 15) dichtend umschließt und/oder das Hebelauge (10) mit zumindest einer stirnseitig angeordneten Axialdichtlippe (16, 17) dichtend berührt.

## Claims

1. Method for producing a sealing bellows with a casing (3), wherein, in a first method step, a sealing bellows with a cylindrical casing (3) is produced in a moulding process, wherein, in a second method step, the sealing bellows with the cylindrical casing (3) is placed into a heated blow mould with a spherical cavity and the blow mould is closed in an airtight manner, wherein, in a third method step, the interior of the sealing bellows is subjected to a relative positive pressure in such a way that the casing (3) is brought to bear against the wall bounding the cavity of the blow mould and the blow mould is subsequently opened and the sealing bellows is demoulded with the casing (3) that is spherical for production-related reasons, **characterized in that**, in the first method steep, the sealing bellows is produced by vulcanization by an injection-moulding process with tensioning elements (4, 5) integrated in the sealing region (1) and in the fastening region (2), **in that** the vulcanization is interrupted after completion of the filling of the mould cavity and after achieving dimensional stability of the sealing bellows, and the sealing bellows is then demoulded from the mould cavity of the injection-moulding mould, and **in that**, in the fourth method steep, the sealing bellows is vulcanized to completion before opening the blow mould.

2. Method according to Claim 1, **characterized in that**, in the third method step, the interior of the sealing bellows is subjected to compressed air.

3. Sealing bellows, produced by a method according to either of Claims 1 and 2, comprising on one end face a sealing region (1), on the other end face a fastening region (2) and a casing (3) arranged between the sealing region (1) and the fastening region (2) in the axial direction, wherein the casing (3), the sealing region (1) and the fastening region (2) are formed so as to go over into one another in one piece and consist of a rubber-elastic material, and wherein a tensioning element (4, 5) is respectively integrated in the sealing region (1) and in the fastening region (2), wherein the casing (3) is of a spherical form for production-related reasons, wherein the first tensioning element (4), in the sealing region (1), has a first inside diameter (6), the second tensioning element (5), in the fastening region (2), has a second inside diameter (7) and the casing (3) has a third, largest inside diameter (8) and wherein the third, largest inside diameter (8) is respectively greater than the first inside diameter (6) and the second inside diameter (7) for production-related reasons.

4. Sealing bellows according to Claim 3, **characterized in that** the casing (3) is of an onion-shaped form for production-related reasons.

5. Sealing bellows according to Claim 3, **characterized in that** the tensioning elements (4, 5) consist of a hard and tough material and are completely enclosed by the rubber-plastic material of the sealing region (1) and of the fastening region (2).

6. Sealing bellows arrangement, comprising a sealing bellows according to one of Claims 3 to 5, the sealing region (1) being in contact with a ball pin (9) and a lever eye (10) of a ball joint (11) in a relatively movable manner and lying against them with a dynamically sealing effect, and the fastening region (2) being in contact with a housing (12) of the ball joint (11) in a relatively fixed manner and lying against it with a sealing effect.

7. Sealing bellows arrangement according to Claim 6, **characterized in that** the sealing region (1) encloses the ball pin (9) with a sealing effect by at least one radially inwardly arranged radial sealing lip (13, 14, 15) and/or is in contact with the lever eye (10) with a sealing effect by at least one axial sealing lip (16, 17) arranged on the end face.

## Revendications

1. Procédé de fabrication d'un soufflet d'étanchéité comprenant une enveloppe (3), un soufflet d'étanchéité avec une enveloppe cylindrique (3) étant fabriqué à l'aide d'un procédé de façonnage lors d'une première étape de procédé, le soufflet d'étanchéité avec l'enveloppe cylindrique (3) étant introduit dans un moule de soufflage chauffé présentant une cavité sphérique lors d'une deuxième étape de procédé et le moule de soufflage étant fermé de manière étanche à l'air, l'intérieur du soufflet d'étanchéité étant soumis à une surpression relative lors d'une troisième étape de procédé, de telle sorte que l'enveloppe (3) s'applique contre la paroi délimitant la cavité du moule de soufflage, et le moule de soufflage étant ensuite ouvert et le soufflet d'étanchéité avec l'enveloppe (3) sphérique du fait de la fabrication étant démoulé, **caractérisé en ce que** le soufflet d'étanchéité est fabriqué par vulcanisation lors de la première étape de procédé au moyen d'un procédé de moulage par injection avec des éléments tendeurs (4, 5) intégrés dans la région d'étanchéité (1) et dans la région de fixation (2), **en ce que** la vulcanisation est interrompue à la fin du remplissage de la cavité d'outil et après avoir atteint la stabilité de forme du soufflet d'étanchéité, et le soufflet d'étanchéité est alors démoulé hors de la cavité d'outil de l'outil de moulage par injection, et **en ce que** le soufflet d'étanchéité est complètement vulcanisé lors de la quatrième étape de procédé avant l'ouverture du moule de soufflage.

2. Procédé selon la revendication 1, **caractérisé en ce que** l'intérieur du soufflet d'étanchéité est soumis à de l'air comprimé lors de la troisième étape de procédé.

3. Soufflet d'étanchéité, fabriqué selon un procédé conformément à l'une des revendications 1 ou 2, comportant, sur un côté frontal, une région d'étanchéité (1), sur l'autre côté frontal, une région de fixation (2), et une enveloppe (3) disposée entre à région d'étanchéité (1) et la région de fixation (2) dans la direction axiale, l'enveloppe (3), la région d'étanchéité (1) et la région de fixation (2) étant réalisées d'un seul tenant de manière à se prolonger les unes dans les autres et étant constituées d'un matériau présentant l'élasticité du caoutchouc, et un élément tendeur (4, 5) étant à chaque fois intégré dans la région d'étanchéité (1) et dans la région de fixation (2), l'enveloppe (3) étant réalisée de manière sphérique du fait de la fabrication, le premier élément tendeur (4) présentant un premier diamètre intérieur (6) dans la région d'étanchéité (1), le deuxième élément tendeur (5) présentant un deuxième diamètre intérieur (7) dans à région de fixation (2) et l'enveloppe (3) présentant un troisième diamètre intérieur (8) le plus grand, et le troisième diamètre intérieur (8) le plus gland étant, du fait de la fabrication, respectivement supérieur au premier (6) et au deuxième diamètre intérieur (7).

4. Soufflet d'étanchéité selon la revendication 3, **caractérisé en ce que** l'enveloppe (3) est réalisée en forme d'oignon du fait de la fabrication.

5. Soufflet d'étanchéité selon la revendication 3, **caractérisé en ce que** les éléments tendeurs (4, 5) sont constitués d'un matériau dur et tenace et sont complètement entourés par le matériau présentant l'élasticité du caoutchouc de la région d'étanchéité (1) et de la région de fixation (2).

6. Agencement de soufflet d'étanchéité, comportant un soufflet d'étanchéité selon l'une quelconque des revendications 3 à 5, la région d'étanchéité (1) étant en contact de manière relativement mobile avec une tourillon à rotule (9) et un oeil de levier (10) d'une articulation à rotule (11), de manière à s'appliquer contre ceux-ci en réalisant une étanchéité dynamique, et la région de fixation (2) étant en contact de manière relativement fixe avec une bottier (12) de l'articulation à rotule (11), en s'appliquant de manière étanche contre celui-ci.

7. Agencement de soufflet d'étanchéité selon la revendication 6, **caractérisé en ce que** la région d'étanchéité (1) entoure de manière étanche le tourillon à rotule (9) par au moins une lèvre d'étanchéité radiale (13, 14, 15) disposée radialement à l'intérieur et/ou l'oeil de levier (10) est en contact étanche avec au moins une lèvre d'étanchéité axiale (16, 17) disposée du côté frontal.
